# EUROPÄISCHE PATENTSCHRIFT

(11) **EP 1 117 589 B1**
(45) Veröffentlichungstag und Bekanntmachung des Hinweises auf die Patenterteilung: **12.03.2003**
(21) Anmeldenummer: 99952476.2
(22) Anmeldetag: 30.09.1999
(51) Int. Cl.: B64F 1/305, H02G 11/02

(54) **TELESKOPIERBARE PASSAGIERBRÜCKE MIT VERSORGUNGSLEITUNG SOWIE AUFNAHME FÜR EINE SOLCHE**
TELESCOPIC GANGWAY WITH A SUPPLY LINE AND A HOLDING ELEMENT FOR SAID LINE
PASSERELLE TELESCOPIQUE A LIGNE D'ALIMENTATION ET LOGEMENT PREVU POUR LADITE LIGNE D'ALIMENTATION

(30) Priorität: 30.09.1998 DE 29817462 U
(43) Veröffentlichungstag der Anmeldung: 25.07.2001
(73) Patentinhaber: Fladung, Manfred, 63776 Mömbris (DE)
(72) Erfinder: Fladung, Manfred, 63776 Mömbris (DE)
(74) Vertreter: Stoffregen, Hans-Herbert, Dr. Dipl.-Phys.
(86) Internationale Anmeldenummer: EP9907251
(87) Internationale Veröffentlichungsnummer: WO00018642

(56) Entgegenhaltungen:
- DE-A- 3 532 657
- DE-U- 29 611 583

## Beschreibung

Die Erfindung bezieht sich auf eine teleskopierbare Passagierbrücke, insbesondere Fluggastbrücke, mit auf ein Fahrzeug ausrichtbarem Brückenkopf sowie entlang der Passagierbrücke verlaufender Versorgungsleitung wie elektrischem Kabel, wobei die Versorgungsleitung zumindest bereichsweise in einer teleskopartig zueinander verschiebbare Abschnitte aufweisenden und von der Passagierbrücke ausgehenden rinnenförmigen Führung gelagert ist und die Abschnitte der rinnenförmigen Führung über erste Gleitstücke gegeneinander abgestützt sind.

Um Flugzeuge mit einer zentralen Bordnetzversorgungsanlage zu verbinden, ist es bekannt, entlang von teleskopierbaren Fluggastbrücken das Versorgungskabel punktuell aufzuhängen. In Abhängigkeit von der Nutzlänge der Fluggastbrücke hängt sodann das Versorgungskabel mehr oder weniger durch (s. zum Beispiel DE 86 18 161 U1). Bei häufigen Längenänderungen der Fluggastbrücke ist daher ein Versorgungskabel starken Beanspruchungen ausgesetzt. Eine zusätzliche Belastung erfolgt dadurch, dass das Versorgungskabel frei herabhängt, also Witterungseinflüssen ausgesetzt ist, wobei zu Aderbrüchen führende Belastungen dann auftreten können, wenn ein entsprechendes Kabel in starke Schwingbewegungen versetzt wird.

Aus der DE-OS 1 901 457 ist eine Vorrichtung zum Beladen und Versorgen von Flugzeugen bekannt. Dabei wird ein elektrisches Kabel in einer U-profilförmigen Rinne unterhalb einer Fluggastbrücke geführt. Die Rinne besteht aus teleskopartig zueinander verschiebbaren Abschnitten, die an ihren Seitenwänden Gleitstücke aufweisen. Beim Teleskopieren der Fluggastbrücke wird das Kabel derart umgelenkt, dass zur Führung genutete Kabelführungsscheiben verwendet werden, um unabhängig von der tatsächlichen Länge der Fluggastbrücke das Kabel stets gespannt zu führen. Beabstandet zum Brückenkopf sind die Kabel mit Festanschlüssen verbunden, von denen wiederum Verbindungskabel zum Flugzeug selbst führen. Eine Relativbewegung zwischen den Kabeln selbst ist nicht möglich, da diese sämtlichst zu den im Fahrgastkopf angeordneten Festanschlüssen führen.

Aus der DE 37 44 050 C2 ist es bekannt, unterhalb einer teleskopierbaren Passagierbrücke eine Teleskopführung für Kabel anzuordnen, die ihrerseits über Gleit- wie Rollenelemente abgestützt sind. Die Führung selbst kann mehr als ein Kabel aufnehmen. Jedes Kabel wird innerhalb der Führung um 180° umgelenkt; so dass bei dicken Kabeln relativ viel Platz benötigt wird, um die Biegeradien einzuhalten. Durch das DE 296 11 583 U1 wird ein unterhalb einer Passagierbrücke in einer teleskopartigen Aufnahme verlaufendes Kabel beschrieben, das endseitig in einem Korb ablegbar ist.

Der US 4,526,090 ist eine Teleskophalterung für Kabel zu entnehmen, wobei Kabelabschnitte innerhalb der Führung mit einem drehbaren Adapter verbunden sind, um eine Umlenkung zu ermöglichen.

Nach der DE 35 32 657 C2 werden Kabel zu einer teleskopierbaren Flugzeugbrücke entlang von umlenkbaren Ketten geführt. Auch nach DE 94 06 570 U1 sind Umlenkrollen erforderlich, um ein Kabel entlang eines teleskopartigen Fluggaststeiges zu führen.

Der vorliegenden Erfindung liegt das Problem zugrunde, eine teleskopierbare Passagierbrücke der eingangs genannten Art so weiterzubilden, dass bei konstruktiv einfachem Aufbau die Versorgungsleitung relativ zu der gesamten Führung leichtgängig verschiebbar ist.

Erfindungsgemäß wird das Problem im Wesentlichen dadurch gelöst, dass die Abschnitte der Führung sowohl boden- als auch seitenwandseitig über die ersten Gleitstücke abgestützt sind, dass die Versorgungsleitung unabhängig von wirksamer Länge der Führung in dieser langgestreckt oder im Wesentlichen langgestreckt verläuft und dass die Abschnitte der Führung bodenseitig abstützende erste Gleitelemente bei in Ausgriff mit einem Abschnitt gleitende Abstützung für die Versorgungsleitung sind. Insbesondere ist vorgesehen, dass in der Führung zumindest zwei Versorgungsleitungen wie Kabel vorhanden sind, die in in der Führung gegebenenfalls voneinander getrennten Kanälen verlaufen. Dabei sind jedem Kanal erste und zweite Gleitstücke zugeordnet, wobei die Gleitstücke eines jeden Kanals unabhängig voneinander mit dem jeweiligen Kabel wechselwirken.

Ferner ist vorgesehen, dass zumindest ein Kabel über einen brückenkopfseitig angeordneten Antrieb aus der Führung heraus - bzw. in diese hineinverschiebbar ist.

Aufgrund der erfindungsgemäßen Lehre ist ein reibungs- und verschleißarmes Verschieben einerseits der teleskopartig zueinander verschiebbaren Abschnitte der Führung selbst und andererseits des in dieser verlaufenden zumindest einen Versorgungskabels möglich, wobei insbesondere eine Schonung erfolgt. Sofern die Führung mehr als eine Versorgungsleitung aufnimmt, ist des Weiteren die Möglichkeit gegeben, dass zum Beispiel eine Versorgungsleitung wie Kabel brückenkopfseitig ortsfest und das andere Kabel aus der Führung herausziehbar ist, um ein Flugzeug zum Beispiel mit 400 Hz Bordstrom zu versorgen. Somit sind die nach dem Stand der Technik erforderlichen Kabeltrommeln am Brückenkopf nicht mehr notwendig.

Unabhängig davon, ob die Versorgungsleitungen wie Kabel relativ zueinander verschiebbar sind oder nicht, erfolgt eine Behinderung durch die Gleitstücke wie Gleitrollen selbst nicht, da jedes Kabel oder zumindest Einheiten von Kabeln, die als Einheit angeordnet bzw. verschoben werden sollen, auf gesonderten Gleitstücken abstützbar sind.

Der einfache Aufbau ergibt sich insbesondere dadurch, dass die ersten Gleitstücke in einem Bereich, in dem Abschnitte der Führung in Ausgriff gelangt sind, für die Versorgungsleitung Gleitstücke sind. Mit anderen Worten üben Gleitstücke eine Doppelfunktion aus, nämlich einmal eine gleitende Abstützung zwischen aufeinander abgestützten Abschnitten der Führung und andererseits eine gleitende Abstützung fiir die Versorgungsleitung in der Führung selbst. Die Versorgungsleitung verläuft im Wesentlichen geradlinig innerhalb der Führung - unabhängig von deren wirksamer Länge -, so dass die nach dem Stand der Technik erforderlichen einen erheblichen Platz benötigenden Umlenkungen nicht erforderlich sind.

Bei der Führung selbst handelt es sich insbesondere um Abschnitte eines U-Profils oder Rechteckprofils, die eine hinreichende Eigensteifigkeit besitzen, ohne dass eine aufwendige Abstützung von außen erforderlich ist.

Um ein knickfreies Einführen bzw. Herausführen der Kabel in die bzw. aus der Führung sicherzustellen, ist vorgesehen, dass im brückenkopfseitigen bzw. rotundenseitigen Endbereich Führungsrolleneinrichtungen angeordnet sind. Um das Kabel aus der Führung herauszuziehen bzw. in dieses hineinschieben zu können, ist erwähntermaßen brückenkopfseitig im Bereich der Führung ein Antrieb vorgesehen, der zu beiden Seiten des Kabels verlaufende Rollen umfassen kann, von denen eines zumindest angetrieben ist. Folglich erfolgt ein Herausziehen bzw. Hineinschieben durch Reibschluss. Andere Antriebseinrichtungen sind gleichfalls möglich.

Insbesondere ist vorgesehen, dass der Antrieb ein angetriebenes scheibenförmiges Umlenkelement vorzugsweise mit peripher umlaufender Vertiefung zur geführten Aufnahme der Versorgungsleitung umfasst und dass im Kontaktbereich zwischen dem Umlenkelement und der Versorgungsleitung auf diese in Richtung des Umlenkelementes Kräfte einleitende Druckelemente angeordnet sind. Dabei weist das Druckelement wie Zylinderelement eine umlaufende Vertiefung zur geführten Aufnahme der Versorgungsleitung auf. Ferner sollten die brückenkopfseitigen Abschnitte der Führung über mehrere Festpunkte mit zugeordnetem teleskopierbarem Passagierbrückenabschnitt und verbleibende Abschnitte brückenkopfabgewandt jeweils endseitig mit zugeordneten teleskopbaren Passagierbrückenabschnitten verbunden sein, wobei die brückenkopfabgewandten Abschnitte innerhalb brückenkopfseitigem Abschnitt bei zusammengezogener Passagierbrücke verlaufen. Des Weiteren ist vorgesehen, dass vorzugsweise jeder Abschnitt der Führung einen U-förmigen Querschnitt mit insbesondere flanschartigen Längsrändern aufweist. Dabei sind der äußere Abschnitt der Führung brückenkopfzugewandt abgedeckt und vorzugsweise bodenseitig offen und die von dem äußeren Abschnitt aufgenommenen und in diesen hineinschiebbaren Abschnitte brückenseitig offen.

Auch besteht die Möglichkeit, im rotundenseitigen Bereich der Führung eine Aufnahme für das Kabel anzuordnen, die abstandsveränderbare Rollen aufweisen kann, entlang der das bzw. die Kabel führbar sind. Hierdurch sind die Kabel stets kontrolliert geführt, wodurch eine zusätzliche Schonung erfolgt. Selbstverständlich besteht auch die Möglichkeit, die rotundenseitig aus der Führung austretenden Kabelabschnitte in einem Aufnahmekorb schwerkraftbedingt abzulegen.

Nach einem eigenerfinderischen Vorschlag wird eine Aufnahme für eine Versorgungsleitung wie Kabel, insbesondere bestimmt zur Versorgung von Luftfahrzeugen wie Flugzeugen auf einem Vorfeld vorgeschlagen, bei der die Versorgungsleitung von einer Aufnahme über ein scheibenförmiges Umlenkelement geführt ist, um das peripher im Kontaktbereich mit der Versorgungsleitung und auf diese Kräfte einleitende Druckelemente angeordnet sind, wobei das Umlenkelement und/oder ein Druckelement angetrieben ist. Insbesondere weisen das Umlenkelement wie Umlenkscheibe und/oder die vorzugsweise rollenförmig ausgebildeten Druckelemente jeweils eine umlaufende Vertiefung zur geführten Aufnahme der Versorgungsleitung auf.

Vorzugsweise ist die Umlenkscheibe mit einem Schneckenantrieb verbunden, um so die Umlenkscheibe in Drehbewegung zu versetzen. Durch die auf die Versorgungsleitungen einwirkenden Druckelemente erfolgt ein Reibschluss derart, dass im erforderlichen Umfang die Versorgungsleitung aus der Aufnahme herausziehbar bzw. in diese ablegbar ist. Anstelle einer korbartigen Aufnahme kann das Kabel auch auf einer federvorgespannten Trommel aufgewickelt bzw. von dieser abgewickelt werden.

Die Aufnahme selbst sollte auf einem Rammschutz wie Betonsockel angeordnet sein, von der auch eine Halterung für das Umlenkelement ausgeht.

Bevorzugterweise ist die Umlenkscheibe auf die Aufnahme derart ausgerichtet, dass die Versorgungsleitung vertikal oder im Wesentlichen vertikal verlaufend der Aufnahme zuführbar bzw. dieser entnehmbar ist.

Weitere Einzelheiten, Vorteile und Merkmale der Erfindung ergeben sich nicht nur aus den Ansprüchen, den diesen zu entnehmenden Merkmalen - für sich und/oder allein -, sondern auch aus der nachfolgenden Beschreibung von der Zeichnung zu entnehmenden bevorzugten Ausführungsbeispielen.

Es zeigen:
- Fig. 1: eine Prinzipdarstellung einer teleskopierbaren Fluggastbrücke mit entlang dieser geführtem Versorgungskabel,
- Fig. 2: eine vergrößerte Darstellung eines Abschnitts des Versorgungskabels und einer dieses aufnehmenden Führung,
- Fig. 3: einen Ausschnitt der Führung gemäß Fig. 1 mit Kabel,
- Fig. 4: einen Querschnitt der Führung gemäß Fig. 3,
- Fig. 5: eine weitere Ausführungsform einer teleskopierbaren Fluggastbrücke mit teleskopierbarer Führung,
- Fig. 6: die Fluggastbrücke gemäß Fig. 5 in eingefahrenem Zustand,
- Fig. 7: eine Seitenansicht der Führung gemäß der Fig. 5 und 6 im Schnitt,
- Fig. 8: eine Vorderansicht der Führung gemäß Fig. 7,
- Fig. 9: eine weitere Ausführungsform einer teleskopierbaren Fluggastbrücke mit Führung,
- Fig. 10: die Fluggastbrücke gemäß Fig. 9 in eingefahrenem Zustand,
- Fig. 11: eine Seitenansicht der Führung gemäß Fig. 9 und 10 im Schnitt,
- Fig. 12: eine Vorderansicht der Führung gemäß Fig. 11,
- Fig. 13: eine Seitenansicht einer brückenkopfseitig angeordneten Kabelumlenkung,
- Fig. 14: die Kabelumlenkung nach Fig. 13 in Vorderansicht,
- Fig. 15: eine Seitenansicht einer Aufnahme für ein Kabel mit Kabelumlenkung und
- Fig. 16: die Anordnung gemäß Fig. 15 in Vorderansicht.

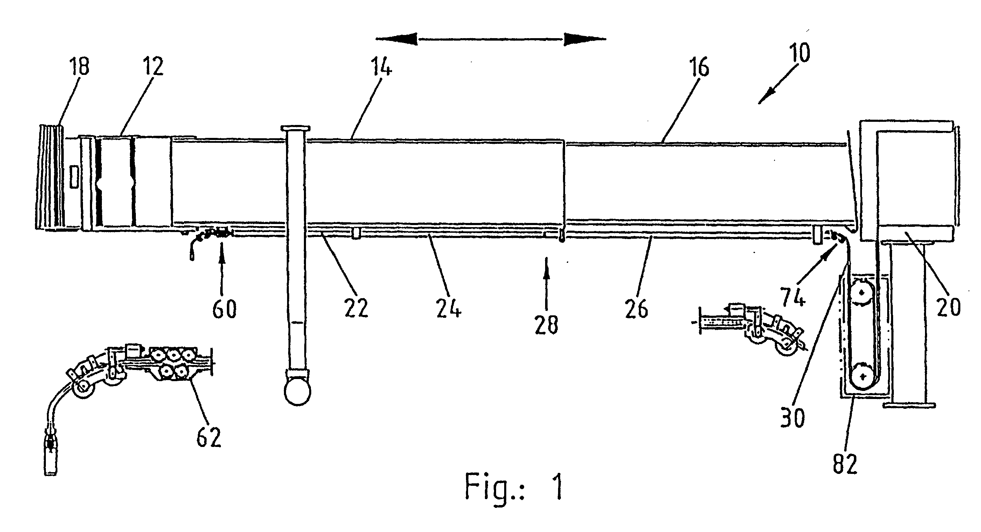

Bei den Figuren 1 bis 4 handelt es sich nicht um ein Ausführungsbeispiel des Erfindung, sondern um ein Beispiel, das das Verständnis der Erfindung erleichtern soll.

In Fig. 1 ist rein prinzipiell eine teleskopierbare Fluggastbrücke 10 dargestellt, die im Ausführungsbeispiel aus drei Schüssen 12, 14, 16 besteht, wobei der vordere in einen Brückenkopf 18 übergeht. Der hintere Schuss 16 geht von einer Rotunde 20 aus. Der Brückenkopf 18 ist an eine Öffnung eines Flugzeuges heranfahrbar, damit Passagiere unmittelbar aus dem Flugzeug in die Fluggastbrücke 10 gelangen und umgekehrt.

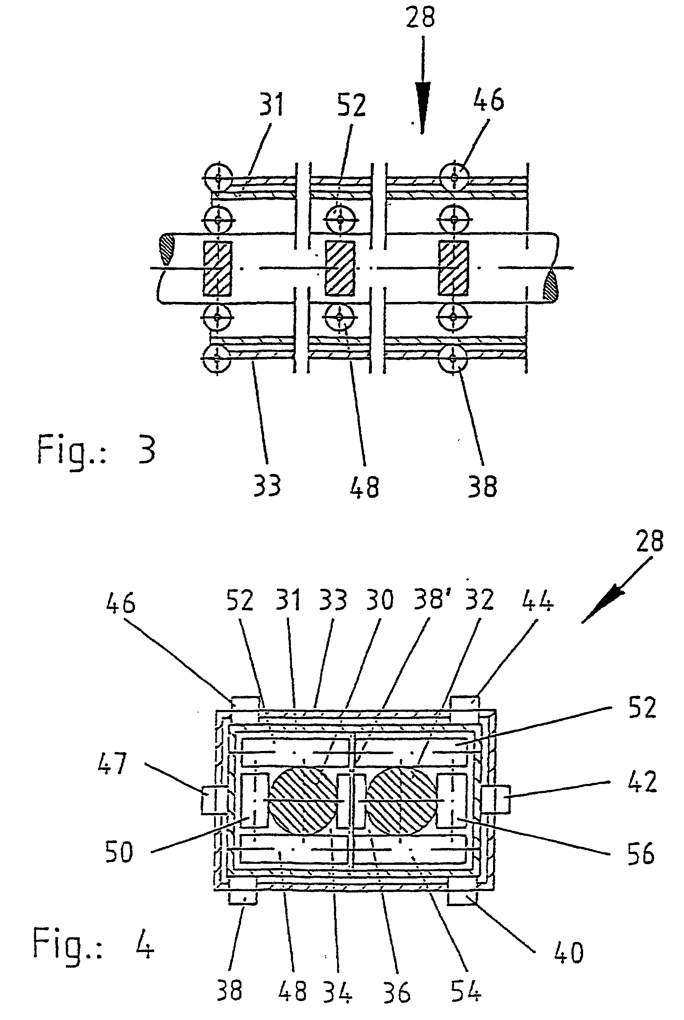

Unterhalb der Fluggastbrücke 10, also der Schüsse 12, 14, 16 sind teleskopartig zueinander verschiebbare Abschnitte 22,24,26 einer Führung 28 angeordnet, innerhalb der Versorgungsleitungen in Form von vorzugsweise zumindest einem Versorgungskabel 30 verlaufen. Entsprechend der Fig. 4 können in der Führung 28 auch mehr als eine Versorgungsleitung wie Kabel 30, 32 verlaufen.

Die aus den teleskopierbaren Abschnitten 22, 24, 26 zusammengesetzte Führung 28 besteht im Ausführungsbeispiel der Fig. 1 - 4 aus Rechteckrohren 31, 33, die über als Gleitstücke 38, 40, 42, 44, 46, 47 ausgebildete Gleitrollen gleitend aufeinander abgestützt sind. Dabei sind Gleitstücke zumindest im Bodenbereich und in den Seitenwandongen vorhanden. Im Ausführungsbeispiel der Fig. 4 sind Gleitrollen 44, 46 auch im Bereich der Kopfwandung vorgesehen. Durch das rollende Abstützen der Abschnitte 22, 24, 26 bzw. der nach dem Ausführungsbeispiel der Fig. 4 als Vierkantrohre ausgebildeten Abschnitte 31, 33 ist ein gleitendes und reibungsarmes Verschieben möglich, so dass die Führung 28 nur einer geringen Wartung bedarf

Sind in der Zeichnung seitenwandseitig Gleitstücke dargestellt, so können diese auch durch sonstige ein gleitendes Verschieben der Abschnitte 22, 24, 26 ermöglichende Elemente oder durch entsprechende Ausbildung der Abschnitte 22, 24, 26 selbst oder durch Auswahl deren Materialien ersetzt werden. Gleiches gilt für die nachfolgend beschriebenen Ausführungsbeispiele.

Die Versorgungsleitungen 30, 32 selbst laufen vorzugsweise in voneinander getrennten Kanälen 34, 36, die über eine Trennwand 38' unterteilt sind. Innerhalb eines jeden Kanals 34, 36 sind die Kabel 30, 32 wiederum auf zweiten Gleitstücken wie Gleitrollen 48, 50, 52 bzw. 54, 56, 58 abgestützt. Dabei sind die jedem Kanal zugeordneten Gleitrollen 48, 50, 52 bzw. 54, 56, 58 unabhängig voneinander drehbar gelagert, so dass die Kabel 30, 32 selbst relativ zueinander innerhalb der Kanäle 34, 36 verschoben werden können, ohne dass eine Behinderung erfolgt. Gegebenenfalls können von der Trennwand 38 ebenfalls - jedoch nicht näher gekennzeichnete - Gleitrollen ausgehen, die jedoch erwähntermaßen sich gegenseitig nicht behindern dürfen.

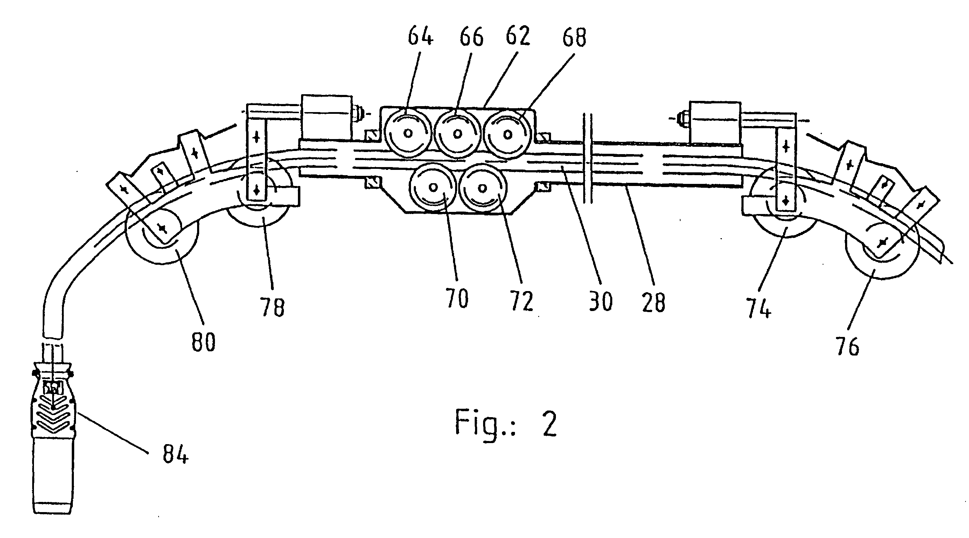

Dadurch, dass die Kabel 30, 32 gleitend in der Führung 28, d.h. deren teleskopierbaren Abschnitten 22, 24, 26 bzw. 31, 33 angeordnet sind, besteht die Möglichkeit, das Kabel 30 aus der Führung 28 herauszuziehen bzw. in diese hineinzuschieben, ohne dass das Kabel 30 unnötig belastet wird. Hierzu ist im brückenkopfseitigen Endbereich 60 ein Antrieb 62 vorgesehen, der im Ausführungsbeispiel insgesamt fünf Rollen 64, 66, 68 bzw. 70, 72 umfasst, die einen Führungskanal begrenzen, in dem das Kabel 30 reibend geführt wird. Dabei wird von zumindest zwei gegenüberliegenden Rollen auf das Kabel eine Kraft eingeleitet. Wird zumindest eine dieser Rollen 64, 66, 68, 70, 72 angetrieben, so wird infolgedessen durch Reibschluss das Kabel 30 entsprechend der Drehrichtung aus der Führung 28 herausgezogen bzw. in diese hineinbewegt. Hierzu ist es erforderlich, dass das Kabel 30 von gegenüberliegenden Seiten im reibenden Kontakt mit den Rollen gelangt, wie dies anhand der Fig. 2 verdeutlicht wird.

Am rotundenseitigen Endbereich 74 bzw. vor dem Antrieb 62 wird das Kabel 30 auf weiteren Rollen 74, 76 bzw. 78, 80 abgestützt, um das Kabel 30 knickfrei in die Führung 28 ein- bzw. herauszuführen.

Von der Rotunde 20 geht eine Aufnahme 82 aus, in der von der Führung 28 ausgehend das Kabel 30 ablegbar ist, nämlich dann, wenn die Fahrgastbrücke 10 zusammengezogen ist. Dabei kann das Kabel 30 im Bereich der Aufnahme 82 über zueinander abstandsveränderbare Rollen geführt werden, wodurch eine scheinbare Verlängerung bzw. Verkürzung des Kabels 30 im Bereich der Aufnahme 82 in Abhängigkeit von der Länge der Fahrgastbrücke 10 und damit der Führung 28 erfolgt.

Auch besteht die Möglichkeit, rotundenseitig eine federvorspannbare Trommel anzuordnen, auf die das Kabel aufwickelbar ist. Beim Ausfahren der Passagierbrücke wird dabei die Trommel gespannt, um beim Zusammenfahren das Kabel automatisch aufzurollen.

Das zu der Führung 28 verschiebbare Kabel 30 kann in gewohnter Weise an seinem freien Ende einen Stecker 84 aufweisen, der in eine Steckeraufnahme am Flugzeug einsteckbar ist, um dieses im erforderlichen Umfang mit elektrischer Energie zu versorgen bzw. Signale zu übertragen.

Weitere Kabel wie das Kabel 32 können auch in einem Festanschluss im Brückenkopf 18 enden, so dass ein Antrieb zum Herausziehen bzw. Hineinschieben in die Führung 28 nicht erforderlich ist.

Die Relativbewegung zwischen den Kabeln 30, 32 ist erfindungsgemäß dadurch möglich, dass jedes Kabel 30, 32 in einem gesonderten Kanal 34, 36 angeordnet ist, innerhalb der unabhängig voneinander drehbare Gleitelemente 48, 50, 52 bzw. 54, 56, 58 angeordnet sind.

Anstelle von entsprechenden Gleitrollen können andere geeignete Gleitelemente ebenfalls zum Einsatz gelangen. Auch ist es möglich, in einem Kanal nicht nur ein Kabel, sondern mehrere Kabel verlaufen zu lassen, die jedoch zueinander eine Relativbewegung nicht ausüben sollten.

Sind die Abschnitte 22, 24, 26 der unterhalb der Fahrgastbrücke 10 verlaufenden Führung 28 wie im Ausführungsbeispiel der Fig. 3 und 4 als Rechteckrohre ausgebildet, so können U-Profile, Rinnen oder andere geeignete Profile gleichfalls genutzt werden, wobei jedoch die Abschnitte selbst eigensteif sein sollten.

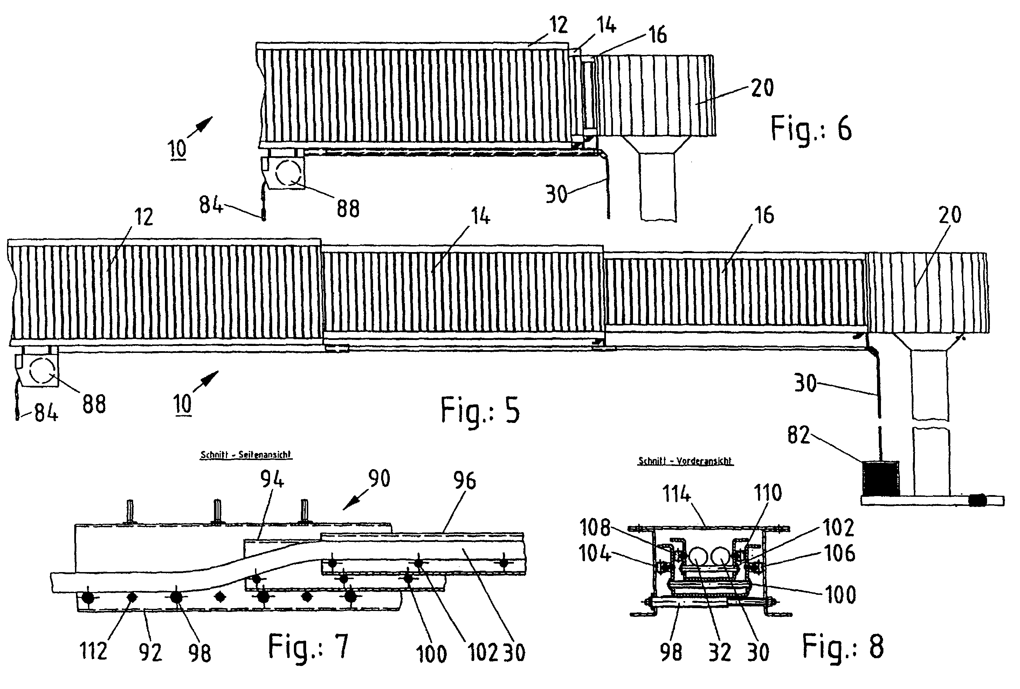

Den Fig. 5 - 14 sind weitere hervorzuhebende Merkmale der erfindungsgemäßen Lehre zu entnehmen, durch die die Möglichkeit geschaffen wird, mit konstruktiv einfachen Maßnahmen platzsparend und geschützt eine Versorgungsleitung wie ein Versorgungskabel für ein Flugzeug entlang einer teleskopierbaren Fluggastbrücke anzuordnen. Dabei werden grundsätzlich gleiche Elemente mit gleichen Bezugszeichen wie zuvor versehen.

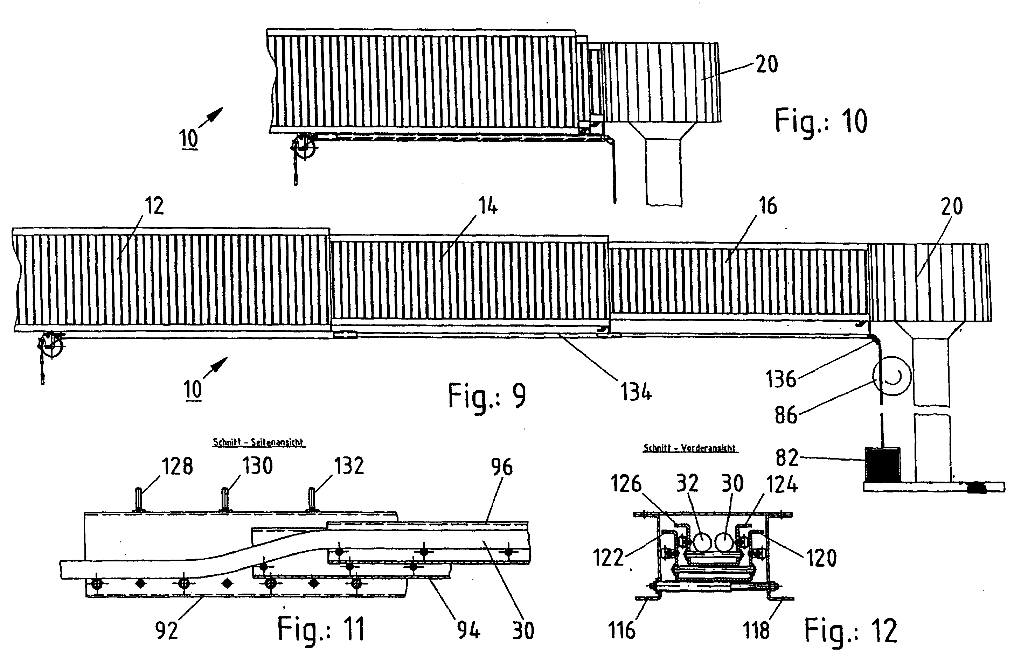

So ist in Fig. 5 die Fluggastbrücke 10 ebenfalls mit drei Schüssen 12, 14, 16 dargestellt, wobei der brückenkopffernliegende Schuss oder Abschnitt 16 in eine Rotunde 20 übergeht, in deren Bereich eine vorzugsweise als Korb 82 ausgebildete Aufnahme für abgelegtes bzw. zu entnehmendes Kabel 30 angeordnet ist. Anstelle eines entsprechenden Aufnahmekorbes 82 kann auch eine federvorspannbare Trommel 86 vorgesehen werden, die gestrichelt in Fig. 9 dargestellt ist. Die Trommel 86 ist dabei mittels einer Feder dann spannbar, wenn die Fluggastbrücke 10 ausgefahren wird. Hierdurch wird eine in der Trommel 86 vorhandene Feder vorgespannt, so dass dann, wenn die Fluggastbrücke 10 eingefahren wird, die Trommel aufgrund der Federvorspannung gedreht wird, so dass das aus der Führung heraustretende Kabel 30 automatisch aufgewickelt wird.

Das Ausführungsbeispiel der Fig. 5 und 6 unterscheidet sich von dem der Fig. 1 dahingehend, als dass das Kabel 30 brückenkopfseitig in eine Verstauvorrichtung übergeht, wie diese dem Europäischen Patent 0 532 212 zu entnehmen ist, auf dessen Offenbarung verwiesen wird. In der Verstauvorrichtung 88 ist ein Abschnitt des Kabels 30 aufgewickelt, welches dann, wenn das Kabel 30 bzw. der an seinem vorderen Ende vorhandene Stecker 84 in ein nicht dargestelltes Flugzeug gesteckt werden soll, von der Verstauvorrichtung 88 bzw. einer in dieser vorhandenen Trommel abgezogen wird. Umgekehrt kann das Kabel auf die Trommel aufgewickelt werden.

Unabhängig hiervon ist das Kabel 30 unterhalb der Fahrgastbrücke 10, also in deren Schüssen 12, 14, 16 in einer teleskopierbaren Führung 90 im Wesentlichen langgestreckt verlaufend angeordnet, wobei die Führung 90 entsprechend der Anzahl der Schüsse 12, 14, 16 der Fahrgastbrücke 10 ebenfalls aus drei Abschnitten oder Schüssen 92, 94, 96 besteht. Da das Kabel 30 im Wesentlichen langgestreckt innerhalb der Führung 90 verläuft, kann die Führung 90 querschnittsmäßig recht kompakt ausgebildet werden, wobei im Wesentlichen eine Auslegung auf die-Anzahl der von der Führung 90 aufzunehmenden Kabel 30, 32 sowie die Geometrie der Abschnitte 92, 94, 96 selbst erfolgt.

Entsprechend dem Ausführungsbeispiel der Fig. 1 - 4 sind die Abschnitte 92, 94, 96 gegeneinander über Gleitrollen 98, 100, 102, die bodenseitig verlaufen, und Gleitrollen 104, 106, 108, 110 abgestützt, die im Seitenwandbereich die Abschnitte 92, 94, 96 vorgesehen sind. Neben diesen Gleitelementen können bodenseitig zumindest innerhalb des brückenkopfseitigen vorderen Abschnitts 92 weitere Gleitelemente wie Gleitrollen 112 vorgesehen sein, die zum Abstützen der Kabel 30, 32 dienen.

Losgelöst hiervon dienen die bodenseitig verlaufenden Gleitelemente 98, 100, über die die in den vorderen, also querschnittsmäßig größten Abschnitt 92 hineinschiebbaren hinteren Abschnitte 94, 96 der Führung 90 abgestützt werden, auch als Gleitlager für die Kabel 30, 32, und zwar dann, wenn die bodenseitigen Gleitlager 98, 100 in Ausgriff mit dem jeweiligen weiteren Abschnitt 94, 96 der Führung 90 sind, wenn also die Abschnitte 94, 96 aus den diese aufnehmenden Abschnitten 92 bzw. 94 herausgezogen sind.

Die Gleitstücke oder Gleitrollen 98, 100, 102 und 112 können auch geteilt derart gelagert sein, dass die jeweiligen Abschnitte unabhängig voneinander mit jeweils zugeordneten Kabel 30, 32 wechselwirken, so dass diese relativ zueinander in der Führung 90 verschiebbar sind.

Jeder Abschnitt 92, 94, 96 der Führung 90 besteht vorzugsweise aus einem U-Profil mit nach außen abgewinkelten, also flanschartigen Rändern, wobei die inneren Abschnitte 94, 96 in Richtung der geschlossenen Kopfwandung 114 des ersten oder äußeren Abschnitts 92 hin offen sind, der seinerseits bodenseitig nicht abgedeckt ist, wie der Schnitt der Fig. 8 und 12 belegt. Die flanschartig ausgebildeten Längsränder sind aus Gründen der Übersicht allein in der Fig. 12 gekennzeichnet und weisen die Bezugszeichen 116, 118, 120, 122, 124, 126 auf.

Der äußere Abschnitt 92 selbst ist über Verbindungselemente 128, 130, 132 mit der Unterseite des brückenseitigen Schusses 12 der Fluggastbrücke 10 verbunden, wohingegen die in den vorderen Abschnitt 92 hineinschiebbaren inneren Abschnitte 94, 96 in ihrem jeweiligen rotundenseitigen Endbereich 134, 136 mit dem entsprechenden Endbereich der Schüsse 14, 16 der Fluggastbrücke 10 verbunden sind. Hierdurch ist die gewünschte Verschiebbarkeit der Abschnitte 92, 94, 96 möglich.

Zu dem äußeren Abschnitt 92, 94 selbst ist anzumerken, dass dieser eine etwa hutförmige Geometrie aufweist, wie die Schnittdarstellungen der Fig. 8 und 12 zeigt.

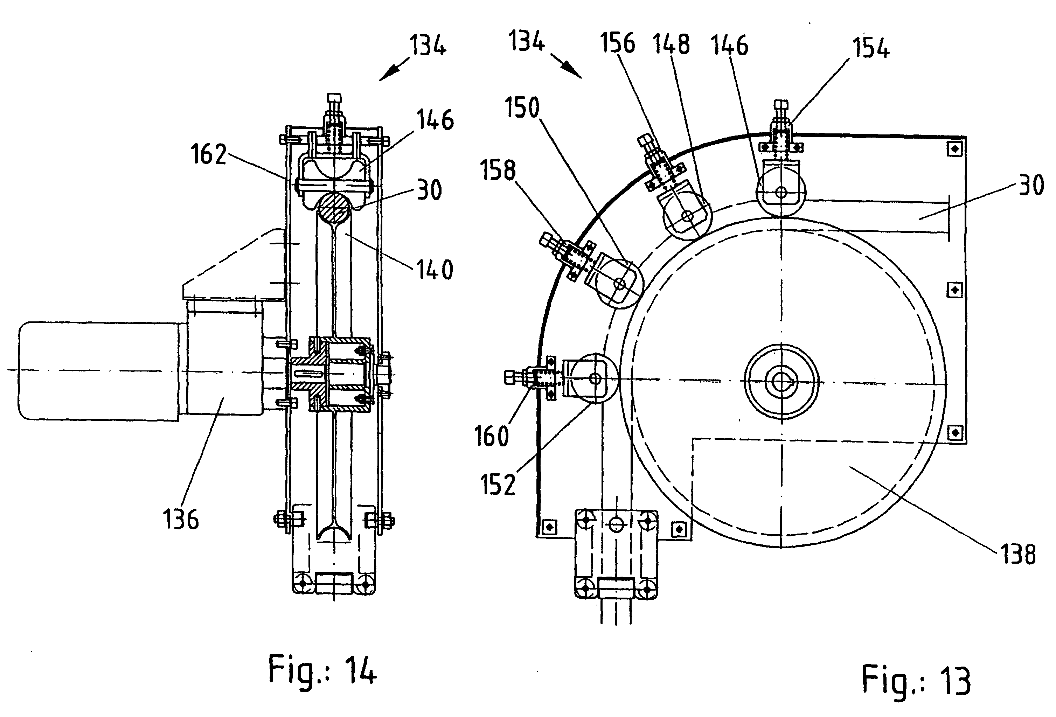

Das Ausführungsbeispiel der Fig. 9 und 10 unterscheidet sich von dem der Fig. 5 und 6 dahingehend, als dass das bzw. die Kabel 30, 32 über eine den Fig. 13 und 14 zu entnehmende Kabelumlenkung 134 aus der unterhalb der Fluggastbrücke verlaufenden Führung 28, 90 herausziehbar bzw. in diese hineinschiebbar ist. Im Übrigen entspricht die Führung der Fluggastbrücke 10 gemäß der Fig. 9 und 10 der der Fig. 5 und 6, so dass eine entsprechende Kennzeichnung erfolgte und auf die entsprechende Beschreibung verwiesen wird.

Die Umlenkeinrichtung 34 umfasst eine über einen Elektromotor wie Schneckenantrieb 136 in Drehbewegung versetzbare Umlenkscheibe 138, die umlaufend eine Vertiefung 140 zur abschnittsweisen Aufnahme des Kabels 30 aufweist.

Im Kontaktbereich zwischen der Umlenkscheibe 138 und dem Kabel 30, also im Ausführungsbeispiel zwischen den Linien 142, 144, der eine Bogenlänge von π/2 aufweist, ist die Umlenkscheibe 138 von Andrückrollen 146, 148, 150, 152 umgeben, zwischen denen und der Umlenkscheibe 138 das Kabel 30 geführt wird. Dabei ist mittels Federn 154, 156, 158, 160 der Druck einzustellen, mit dem die Druckrollen 146, 148, 150, 152 auf das Kabel 30 einwirken sollen. Hierdurch ergibt sich ein Reibschluss mit der Folge, dass bei Drehung der Umlenkscheibe 138 das Kabel 30 im gewünschten Umfang aus der Führung 90 herausgezogen bzw. in diese hineingeschoben wird, wobei aufgrund der über Kugeln gelagerten Gleitrollen 98, 100, 102 in die Führung 90 eine Leichtgängigkeit sichergestellt ist. Die Druckrollen 146, 148, 150, 152 sind dabei derart eingestellt, dass bei stehendem Antrieb 136 das Kabel 30 beim Herausfahren bzw. Zusammenschieben der Fluggastbrücke 10 festgeklemmt wird, so dass das Kabel 30 im gewünschten Umfang aus der Aufnahme 82 herausgezogen bzw. abgelegt wird oder bei der Verwendung der Aufwickeltrommel 86 von dieser abgezogen bzw. auf diese aufgewickelt wird. Dass sich dabei die Umlenkscheibe 138 nicht dreht, liegt an dem Schneckenantrieb 136, das ein Durchdrehen verhindert. Andere geeignete Maßnahmen zur Realisierung sind gleichfalls möglich.

Wie die Schnittdarstellung gemäß Fig. 14 verdeutlicht, weisen die Druckrollen 146, 148, 150, 152 eine umlaufende Vertiefung 162 auf, um das Kabel 30 geführt aufzunehmen und somit die erforderlichen Kräfte übertragen zu können.

Die den Fig. 13 und 14 zu entnehmende Umlenkeinrichtung 134 kann auch dazu verwendet werden, um unmittelbar aus einer Aufnahme 164, die als kubusförmiger Aufnahmekorb ausgebildet sein kann, ein Kabel 166 zu entnehmen bzw. in diese abzulegen. Anstelle der Aufnahme kann auch eine federvorspannbare Trommel benutzt werden, wie diese in der Fig. 9 angedeutet und in diesem Zusammenhang beschrieben ist.

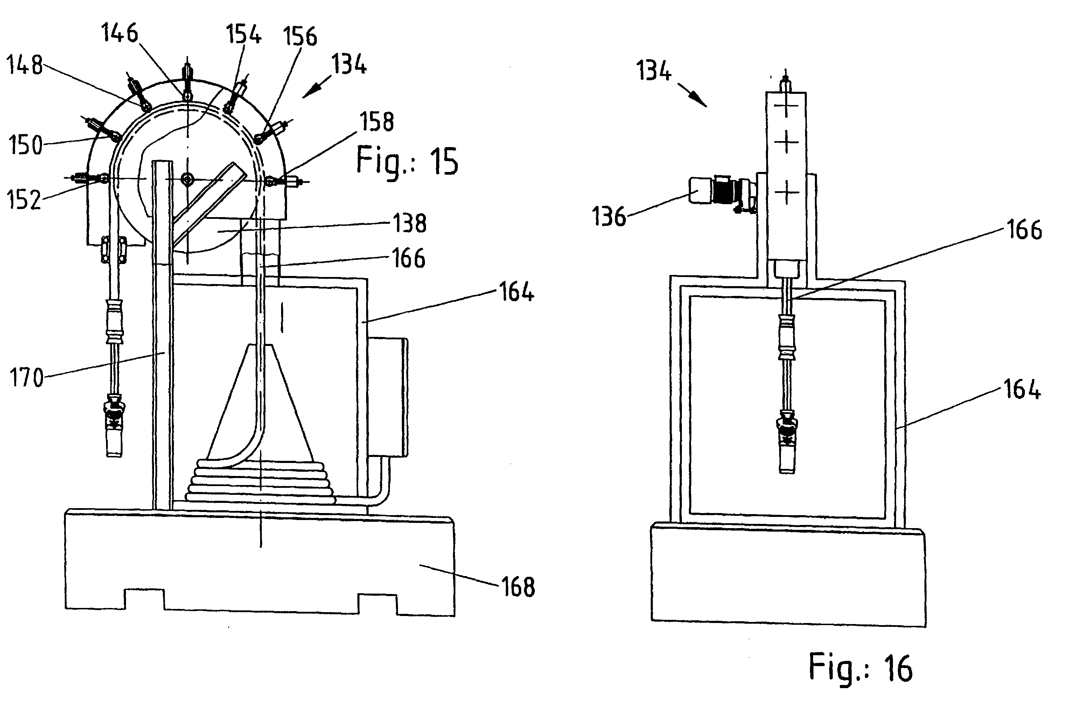

Die den Fig. 15 und 16 zu entnehmende Anordnung ist zum Beispiel zum Versorgen eines Flugzeuges auf dem freien Flugfeld bestimmt. Hierzu kann die Aufnahme 164 fiir das Kabel 166 auf einem Rammschutz wie Betonsockel 168 angeordnet sein. Von diesem geht eine Halterung 170 für die Umlenkeinrichtung 134 aus, die ebenfalls neben der Umlenkscheibe 138 entlang des Kontaktbereiches mit dem Kabel 166 Druckrollen 146, 148, 150, 152 sowie 154, 156, 158 aufweist. Im Vergleich zu dem Ausführungsbeispiel der Fig. 13 und 14 erstreckt sich der Kontaktbereich des Kabels 166 entlang der Umlenkscheibe 138 auf 180° oder π. Dementsprechend sollte die Anzahl der Druckrollen erhöht werden. Ansonsten wird von der Konstruktion auf die Erläuterung der Fig. 13 und 14 verwiesen.

Anzumerken ist jedoch, dass das Kabel 166 derart von der Umlenkscheibe 138 geführt werden sollte, dass das Kabel 166 aus der Aufnahme 164 vertikal oder im Wesentlichen vertikal entnommen bzw. in diese abgelegt werden kann, wie auch die Seitenansicht gemäß Fig. 15 verdeutlicht.

Zu den von den erfindungsgemäß ausgebildeten Führungen 28, 90 aufgenommenen Versorgungsleitungen wie Kabeln selbst ist anzumerken, dass es sich um querschnittsmäßig recht dicke Leitungen oder Kabel mit zum Beispiel einem Durchmesser von 40 mm oder mehr handeln kann. Aufgrund der erfindungsgemäßen Führung ist jedoch der Vorteil gegeben, dass diese nicht unzulässig gebogen bzw. geknickt werden können, so dass eine hohe Lebensdauer gewährleistet ist, Vorteile, die der Stand der Technik nicht bietet, sofern die Kabel innerhalb der Führung umgelenkt werden müssen.

## Patentansprüche

1. Teleskopierbare Passagierbrücke (10), insbesondere Fluggastbrücke mit Brückenkopf und Rotunde (20), mit entlang der Passagierbrücke verlaufender Versorgungsleitung (30, 32), wie zumindest einem elektrischen Kabel, wobei die Versorgungsleitung zumindest bereichsweise in einer teleskopartig zueinander verschiebbare Abschnitte (22, 24, 26, 92, 94, 96) aufweisenden und von der Passagierbrücke ausgehenden rinnenförmigen Führung (28, 90) gelagert ist und die Abschnitte der rinnenförmigen Führung über erste Gleitstücke (38, 40, 42, 47, 98, 100, 104, 106, 108, 110) gegeneinander abgestützt sind,
**dadurch gekennzeichnet,**
**dass** die Abschnitte (22, 24, 26, 92, 94, 96) der Führung (28, 90) zumindest sowohl boden- als auch seitenwandseitig über die ersten Gleitstücke (38, 40, 42, 47, 98, 100, 104, 106, 108, 110) abgestützt sind, dass die Versorgungsleitung in der Führung langgestreckt oder im Wesentlichen langgestreckt mit einer Länge verläuft, die der jeweiligen wirksamen Länge der Führung entspricht, und dass die Abschnitte der Führung bodenseitig abstützende erste Gleitelemente (38, 40, 98, 100) bei in Ausgriff mit einem Abschnitt gleitende Abstützungen für die Versorgungsleitung sind.

2. Passagierbrücke nach Anspruch 1,
**dadurch gekennzeichnet,**
**dass** die Versorgungsleitung (30) vorzugsweise in Form eines elektrischen Kabels über einen brückenkopfseitig angeordneten Antrieb (62, 88, 134) aus der Führung (28, 90) herausziehbar bzw. in diese hineinschiebbar ist.

3. Passagierbrücke nach Anspruch 1 oder 2,
**dadurch gekennzeichnet,**
**dass** der Antrieb (134) ein angetriebenes scheibenförmiges Umlenkelement (138) vorzugsweise mit peripher umlaufender Vertiefung (140) zur geführten Aufnahme der Versorgungsleitung (30) umfasst und dass im Kontaktbereich zwischen dem Umlenkelement und der Versorgungsleitung auf diese in Richtung des Umlenkelementes Kräfte einleitende Druckelemente (146, 148, 150, 152) angeordnet sind.

4. Passagierbrücke nach zumindest einem der vorhergehenden Ansprüche,
**dadurch gekennzeichnet,**
**dass** das Druckelement (146, 148, 150, 152) ein Zylinderelement mit umlaufender Vertiefung (162) zur geführten Aufnahme der Versorgungsleitung (30) ist.

5. Passagierbrücke nach zumindest einem der vorhergehenden Ansprüche,
**dadurch gekennzeichnet,**
**dass** über einen Bogen von vorzugsweise π/2 Druckelemente (146, 148, 150, 152), vorzugsweise vier Druckelemente gleichmäßig entlang des Bogens verteilt angeordnet sind.

6. Passagierbrücke nach zumindest einem der vorhergehenden Ansprüche,
**dadurch gekennzeichnet,**
**dass** brückenkopfseitige Abschnitte (92) der Führung (90) über mehrere Festpunkte (128, 130, 132) mit zugeordnetem teleskopierbaren Passagierbrückenabschnitt (12) verbunden und dass verbleibende Abschnitte (94, 96) brückenkopfabgewandt jeweils endseitig mit zugeordneten teleskopierbaren Passagierbrückenabschnitten (14, 16) verbunden sind, wobei die brückenkopfabgewandten Abschnitte innerhalb brückenkopfseitigem Abschnitt bei zusammengezogener Passagierbrücke verlaufen.

7. Passagierbrücke nach zumindest einem der vorhergehenden Ansprüche,
**dadurch gekennzeichnet,**
**dass** vorzugsweise jeder Abschnitt (92, 94, 96) der Führung (90) einen U-förmigen Querschnitt mit insbesondere flanschartigen Längsrändern (116, 118, 120, 122, 124, 126) aufweist.

8. Passagierbrücke nach zumindest einem der vorhergehenden Ansprüche,
**dadurch gekennzeichnet,**
**dass** der äußere Abschnitt (92) der Führung (90) brückenkopfzugewandt abgedeckt und vorzugsweise bodenseitig offen ist und dass die von dem äußeren Abschnitt aufgenommenen und in diesen hineinschiebbaren Abschnitte (92, 94) brückenseitig offen sind.

9. Passagierbrücke nach zumindest einem der vorhergehenden Ansprüche,
**dadurch gekennzeichnet,**
**dass** die Gleitstücke (98, 100, 102) insbesondere kugelgelagerte Gleitstücke wie - rollen sind.

10. Passagierbrücke nach zumindest einem der vorhergehenden Ansprüche,
**dadurch gekennzeichnet,**
**dass** die Versorgungsleitung (30) im brückenkopffernliegenden wie rotundenseitigen Bereich in eine Aufnahme (82) ablegbar und/oder auf eine insbesondere federvorspannbare Trommel (86) aufwickelbar ist.

11. Passagierbrücke nach zumindest einem der vorhergehenden Ansprüche,
**dadurch gekennzeichnet,**
**dass** in der Führung (28) zumindest zwei Versorgungsleitungen wie elektrische Kabel (30, 32) verlaufen, die vorzugsweise in in der Führung (28) voneinander getrennten Kanälen (34, 36) abgestützt sind, denen jeweils unabhängig voneinander drehbare Gleitstücke (48, 50, 52, 54, 56) zugeordnet sind und/oder jeweils auf unabhängig voneinander mit der jeweiligen Versorgungsleitung wechselwirkenden Gleitstücken abstützbar sind.

12. Passagierbrücke nach zumindest einem der vorhergehenden Ansprüche,
**dadurch gekennzeichnet,**
**dass** zumindest eine Versorgungsleitung wie elektrisches Kabel brückenkopfseitig ortsfest angeordnet ist.

13. Passagierbrücke nach zumindest einem der vorhergehenden Ansprüche,
**dadurch gekennzeichnet,**
**dass** die Versorgungsleitung wie das elektrische Kabel (30, 32) zumindest im aufnahmeseitigen Endbereich (74) und/oder im brückenkopfseitigen Endbereich (60) der teleskopartigen Führung (28) entlang von Abstützrollen (74, 76, 78, 80) geführt ist.

14. Passagierbrücke nach zumindest einem der vorhergehenden Ansprüche,
**dadurch gekennzeichnet,**
**dass** die Führung (28) aus U- oder rinnenförmigen Profilen oder Rechteckrohren (34, 36) als die Abschnitte zusammengesetzt ist.

15. Passagierbrücke nach zumindest einem der vorhergehenden Ansprüche,
**dadurch gekennzeichnet,**
**dass** zwischen den Kanälen (34, 36) eine Trennwand (38) verläuft, von der zweite Gleitstücke ausgehen.

16. Passagierbrücke nach zumindest einem der vorhergehenden Ansprüche,
**dadurch gekennzeichnet,**
**dass** die Aufnahme (82) abstandsveränderbare Umlenkollen umfasst, entlang der die Versorgungsleitung (30) führbar ist.

17. Passagierbrücke nach zumindest einem der vorhergehenden Ansprüche,
**dadurch gekennzeichnet,**
**dass** die Versorgungsleitung (30) im brückenkopfseitigen Bereich (60) in einem von Rollen (64, 66, 68; 70, 72) begrenzten Kanal geführt ist, von denen zumindest eine angetrieben ist.

18. Passagierbrücke nach zumindest Anspruch 1 mit einer Aufnahme für die Versorgungsleitung,
**dadurch gekennzeichnet,**
**dass** die Versorgungsleitung (166) von einer Aufnahme (164) über ein scheibenförmiges Umlenkelement (138) gerührt ist, um das peripher im Kontaktbereich mit der Versorgungsleitung und auf diese Kräfte einleitende Druckelemente (146, 148, 150, 152, 154, 156, 158) angeordnet sind, wobei das Umlenkelement und/oder ein Druckelement angetrieben ist.

19. Passagierbrücke nach Anspruch 18,
**dadurch gekennzeichnet,**
**dass** das Umlenkelement wie Umlenkscheibe (138) und/oder die vorzugsweise rollenförmig ausgebildeten Druckelemente (146, 148, 150, 152, 154, 156, 158) jeweils eine umlaufende Vertiefung (140, 162) zur geführten Aufnahme der Versorgungsleitung (166) aufweisen.

20. Passagierbrücke nach zumindest einem der Ansprüche 18 und 19,
**dadurch gekennzeichnet,**
**dass** das Umlenkelement wie die Umlenkscheibe (138) mit einem Schneckenantrieb (136) verbunden ist.

21. Passagierbrücke nach zumindest einem der Ansprüche 18 bis 20,
**dadurch gekennzeichnet,**
**dass** die Druckelemente (146, 148, 150, 152, 154, 156, 158) im Kontaktbereich mit der Versorgungsleitung (30, 166) gleichmäßig um das Umlenkelement verteilt angeordnet sind.

22. Passagierbrücke nach zumindest einem der Ansprüche 18 bis 21,
**dadurch gekennzeichnet,**
**dass** die Aufnahme ein Ablegekorb (82) und/oder eine federvorgespannte Trommel (86) ist.

23. Passagierbrücke nach zumindest einem der Ansprüche 18 bis 22,
**dadurch gekennzeichnet,**
**dass** die Aufnahme (164) auf einem Rammschutz (168) wie Betonsockel angeordnet ist.

24. Passagierbrücke nach zumindest einem der Ansprüche 18 bis 23,
**dadurch gekennzeichnet,**
**dass** das Umlenkelement (138) wie die Umlenkscheibe auf die Aufnahme (164) derart aasgerichtet ist, dass die Versorgungsleitung (166) vertikal oder im Wesentlichen vertikal verlaufend der Aufnahme zuführbar bzw. dieser entnehmbar ist.

## Claims

1. Telescopic gangway (10), especially gangway for flight passengers with a bridgehead and rotunda (20), with a supply line (30, 32) such as at least one electric cable that runs along the gangway, wherein the supply line is held at least in some areas in a channel-shaped guide (28, 90) which has sections (22, 24, 26 92, 94, 96) that can be displaced toward each other telescopically and which extends out from the gangway and wherein the sections of this channel-shaped guide are supported against each other by first sliding pieces (38, 40, 42, 47, 98, 100, 104, 106, 108, 110)
**whereby**
the sections (22, 24, 26, 92, 94, 96) of the guide (28, 90) are supported by the first sliding pieces (38, 40, 42, 47, 98, 100, 104, 106, 108, 110) at least on the floor and wall sides, that the supply line runs in the guide long stretched-out or essentially long stretched-out with a length corresponding to the respective usable length of the guide, and that the sections of the guide are first sliding elements (38, 40, 98; 100) providing support on the floor side, said first sliding elements providing sliding supports for the supply line when non-contacting a section.

2. Gangway in accordance with Claim 1,
**whereby**
the supply line (30), preferably in the form of an electric cable, can be pulled of the guide (28, 90) or inserted into it with a drive (62, 88, 134) that is arranged at the bridgehead.

3. Gangway in accordance with Claim 1 or 2,
**whereby**
the drive (134) comprises a driven disk-shaped deflection element (138), preferably with a peripheral circumferential groove (140) for a guided receipt of the supply line (30), and whereby in the contact area between the deflection element and the supply line pressure elements (146, 148, 150, 152) are arranged that exercise pressure onto this line in the direction of the deflection element.

4. Gangway in accordance with at least one of the previous claims,
**whereby**
the pressure element (146, 148, 150, 152) is a cylinder element with a circumferential groove (162) for a guided receipt of the supply line (30).

5. Gangway in accordance with at least one of the previous claims,
**whereby**
pressure elements (146, 148, 150, 152) are arranged across an arc of preferably π/2, preferably four pressure elements evenly along the arc.

6. Gangway in accordance with at least one of the previous claims,
**whereby**
bridgehead side sections (92) of the guide (90) are connected with allocated telescopic gangway section (12) in several fixed points (128, 130, 132) and that remaining sections (94, 96) are connected with allocated telescopic gangway sections (14, 16) respectively at the end, opposite the bridgehead side, wherein the sections opposite the bridgehead side run within the bridgehead side section when the gangway is contracted.

7. Gangway in accordance with at least one of the previous claims,
**whereby**
preferably every section (92, 94, 96) of the guide (90) has a U-shaped cross-section with especially flange-like longitudinal edges (116, 118, 120, 122, 124, 126).

8. Gangway in accordance with at least one of the previous claims,
**whereby**
the outer section (92) of the guide (90) is covered facing the bridgehead and preferably open on the floor side and whereby the sections (92, 94) which are held by the outer section and can be pushed into it are open on the bridge side.

9. Gangway in accordance with at least one of the previous claims,
**whereby**
the sliding pieces (98, 100, 102) are sliding pieces such as sliding rollers, especially with ball bearings.

10. Gangway in accordance with at least one of the previous claims,
**whereby**
the supply line (30), both in the area opposite the bridgehead area and the rotunda side area, can be placed into a receptacle (82) and/or be wound onto a particularly spring-preloadable reel (86).

11. Gangway in accordance with at least one of the previous claims,
**whereby**
within the guide (28) at least two supply lines such as electric cables (30, 32) are running, which are supported by channels (34, 36), preferably separated from each other in the guide (28), and to which sliding pieces (48, 50, 52, 54, 56) that can pivot independently from each other are allocated and/or which can be supported on sliding pieces that interact with the respective supply line independently from each other.

12. Gangway in accordance with at least one of the previous claims,
**whereby**
at least one supply line such as an electric cable is arranged in a stationary manner at the bridgehead side.

13. Gangway in accordance with at least one of the previous claims,
**whereby**
the supply line such as the electric cable (30, 32) is guided along by supporting rollers (74, 76, 78, 80) at least in the receptacle side end area (74) and/or in the bridgehead side end area (60) of the telescopic guide (28).

14. Gangway in accordance with at least one of the previous claims,
**whereby**
the guide (28) consists of U-shaped or channel-shaped profiles or rectangular tubes (34, 36) as the sections.

15. Gangway in accordance with at least one of the previous claims,
**whereby**
between the channels (34, 36) a separating wall (38) runs from which second sliding pieces extend.

16. Gangway in accordance with at least one of the previous claims,
**whereby**
the receptacle (82) comprises deflection rollers whose distance adjustable, along which the supply line (30) can be guided.

17. Gangway in accordance with at least one of the previous claims,
**whereby**
the supply line (30) in the bridgehead side area (60) is guided in a channel limited by rollers (64, 66, 68; 70, 72), of which at least one is driven.

18. Gangway in accordance with at least Claim 1 with a receptacle for the supply line,
**whereby**
the supply line (166) extending from a receptacle (164) is guided by a disk-shaped deflection element (138), around which pressure elements (146, 148, 150, 152, 154, 156, 158) that exercise pressure on the supply line are arranged peripherally in the contact area with the supply line, wherein the deflection element and/or a pressure element is driven.

19. Gangway in accordance with Claim 18,
**whereby**
the deflection element such as a deflection disk (138) and/or the preferably roller-shaped pressure elements (146, 148, 150, 152, 154, 156, 158) are equipped respectively with a circumferential groove (140, 162) for a guided receipt of the supply line (166).

20. Gangway in accordance with at least one of the Claims 18 and 19,
**whereby**
the deflection element such as the deflection disk (138) is connected with a worm drive (136).

21. Gangway in accordance with at least one of the Claims 18 to 20,
**whereby**
the pressure elements (146, 148, 150, 152, 154, 156, 158) are arranged evenly around the deflection element in the contact area with the supply line (30, 166).

22. Gangway in accordance with at least one of the Claims 18 to 21,
**whereby**
the receptacle is a receiving basket (82) and/or a spring-preloaded reel (86).

23. Gangway in accordance with at least one of the Claims 18 to 22,
**whereby**
the receptacle (164) is arranged on a pile protection device (168) such as a concrete socle.

24. Gangway in accordance with at least one of the Claims 18 to 23,
**whereby**
the deflection element (138) such as the deflection disk is aligned with the receptacle (164) in such a way that the supply line (166) can be placed into this receptacle or be removed from it vertically or essentially vertically.

## Revendications

1. Passerelle télescopique pour passagers (10), en particulier passerelle pour passagers d'avions avec téte de passerelle et rotonde (20), avec une conduite d'alimentation (30, 32), telle qu'au moins un câble électrique, cheminant le long de la passerelle pour passagers, la conduite d'alimentation étant logée au moins par zones dans un guidage en forme de rigole (28, 90) comportant des sections pouvant s'emboîter les unes dans les autres de manière télescopique (22, 24, 26, 92, 94, 96) et partant de la passerelle pour passager, et les sections du guidage en forme de rigole étant soutenues les unes par rapport aux autres par des premières glissières (38, 40, 42, 47, 98, 100, 104, 106, 108, 110),
**caractérisée en ce**
**que** les sections (22, 24, 26, 92, 94, 96) du guidage (28, 90) sont au moins soutenues à la fois sur leur fond et sur leur paroi latérale par les premières glissières (38, 40, 42, 47, 98, 100, 104, 106, 108, 110), que la conduite d'alimentation chemine dans le sens longitudinal ou essentiellement dans le sens longitudinal sur une longueur correspondant aux longueurs utiles respectives du guidage, et que les premières glissières (38, 40, 98, 100) soutenant sur leur fond les sections du guidage sont des appuis coulissants pour la conduite d'alimentation dans une section lorsque la passerelle est déployée.

2. Passerelle pour passagers selon la revendication 1,
**caractérisée en ce**
**que** la conduite d'alimentation (30) revêtant de préférence la forme d'un câble électrique peut être sortie du guidage (28, 90) ou introduite dans celui-ci au moyen d'un entraînement (62, 88, 134) disposé du côté de la tête de la passerelle.

3. Passerelle pour passagers selon la revendication 1 ou 2,
**caractérisée en ce**
**que** l'entraînement (134) comprend un élément de renvoi entraîné en forme de poulie (138) présentant de préférence un évidement périphérique (140) pour loger et guider la conduite d'alimentation (30), et que dans la zone de contact entre l'élément de renvoi et la conduite d'alimentation sont disposés des éléments de pression (146, 148, 150, 152) induisant des forces sur celle-ci en direction de l'élément de renvoi.

4. Passerelle pour passagers selon au moins l'une des revendications précédentes,
**caractérisée en ce**
**que** l'élément de pression (146, 148, 150, 152) est un élément cylindrique avec un évidement périphérique (162) destiné à loger et guider la conduite d'alimentation (30).

5. Passerelle pour passagers selon au moins l'une des revendications précédentes,
**caractérisée en ce**
**que** sur un arc de cercle de π/2 rad de préférence, des éléments de pression (146, 148, 150, 152), de préférence quatre éléments de pression, sont répartis régulièrement le long de l'arc de cercle.

6. Passerelle pour passagers selon au moins l'une des revendications précédentes,
**caractérisée en ce**
**que** la section côté tête de la passerelle (92) du guidage (90) est reliée par plusieurs points fixes (128, 130, 132) à la section de passerelle pour passagers télescopique correspondante (12) et que des sections restantes (94, 96) opposées à la tête de la passerelle sont respectivement reliées à leur extrémité à des sections correspondantes de la passerelle pour passagers (14, 16), les sections opposées à la tête de la passerelle étant logées dans la section côté tête de la passerelle lorsque la passerelle pour passagers est repliée.

7. Passerelle pour passagers selon au moins l'une des revendications précédentes,
**caractérisée en ce**
**que** de préférence chaque section (92, 94, 96) du guidage (90) présente une coupe transversale en forme de U avec notamment des bords longitudinaux fonnés en bride (116, 118, 120, 122, 124, 126).

8. Passerelle pour passagers selon au moins l'une des revendications précédentes,
**caractérisée en ce**
**que** la section extérieure (92) du guidage (90) est recouverte du côté de la tête de la passerelle et de préférence ouverte sur son fond et que les sections (92, 94) qui se logent dans la section extérieure et peuvent être introduites dans celle-ci sont ouvertes du côté de la tête de la passerelle.

9. Passerelle pour passagers selon au moins l'une des revendications précédentes,
**caractérisée en ce**
**que** les glissières (98, 100, 102) sont en particulier des glissières montées sur des roulements à billes et à rouleaux.

10. Passerelle pour passagers selon au moins l'une des revendications précédentes,
**caractérisée en ce**
**que** la conduite d'alimentation (30) dans la zone éloignée de la tête de la passerelle telle que la zone du côté de la rotonde peut être déposée dans un logement (82) et/ou enroulée sur un tambour (86) pouvant être notamment tendu par un ressort.

11. Passerelle pour passagers selon au moins l'une des revendications précédentes,
**caractérisée en ce**
**que** dans le guidage (28) passent au moins deux conduites d'alimentation telles que des câbles électriques (30, 32), soutenues de préférence par deux canaux (34, 36) séparés l'un de l'autre dans le guidage (28), auxquels sont affectés des glissières (48, 50, 52, 54, 56) pivotant indépendamment les unes des autres, et/ou peuvent être soutenus indépendamment l'un de l'autre par des glissières alternativement avec les conduites d'alimentation respectives.

12. Passerelle pour passagers selon au moins l'une des revendications précédentes,
**caractérisée en ce**
**qu'**au moins une conduite d'alimentation telle qu'un câble électrique est fixée de façon stationnaire du côté de la tête de la passerelle.

13. Passerelle pour passagers selon au moins l'une des revendications précédentes,
**caractérisée en ce**
**que** la conduite d'alimentation telle que le câble électrique (30, 32) ) est guidée le long du guidage télescopique (28) par des galets-supports (74, 76, 78, 80) au moins à l'extrémité côté logement (74) et/ou à l'extrémité côté tête de la passerelle (60).

14. Passerelle pour passagers selon au moins l'une des revendications précédentes,
**caractérisée en ce**
**que** le guidage (28) est réalisé par des profilés en forme de U ou de rigole, ou de tubes rectangulaires (34, 36) qui constituent les sections.

15. Passerelle pour passagers selon au moins l'une des revendications précédentes,
**caractérisée en ce**
**qu'**entre les canaux (34, 36) passe une cloison (38) de laquelle partent deux glissières.

16. Passerelle pour passagers selon au moins l'une des revendications précédentes,
**caractérisée en ce**
**que** le logement (82) comprend des galets de renvois dont la distance peut être modifiée et le long desquels la conduite d'alimentation (30) peut être guidée.

17. Passerelle pour passagers selon au moins l'une des revendications précédentes,
**caractérisée en ce**
**que** dans la zone côté tête de la passerelle (60), la conduite d'alimentation (30) est guidée dans un canal limité par des galets (64, 66, 68 ; 70, 72) dont au moins un est entraîné.

18. Passerelle pour passagers selon au moins la revendication 1 avec un logement pour la conduite d'alimentation,
**caractérisée en ce**
**que** la conduite d'alimentation (166) sortant d'un logement (164) est guidée par l'intermédiaire d'un élément de renvoi en forme de poulie (138) sur la périphérie duquel sont disposés des éléments de pression (146, 148, 150, 152, 154, 156, 158) dans la zone de contact avec la conduite d'alimentation et induisant des forces sur elle, l'élément de renvoi et/ou un élément de pression étant entraîné.

19. Passerelle pour passagers selon la revendication 18,
**caractérisée en ce**
**que** l'élément de renvoi tel qu'une poulie de renvoi (138) et/ou les éléments de pression (146, 148, 150, 152, 154, 156, 158) de préférence en forme de galet présentent chacun un évidement périphérique (140, 162) pour loger et guider la conduite d'alimentation (166).

20. Passerelle pour passagers selon au moins l'une des revendications 18 et 19,
**caractérisée en ce**
**que** l'élément de renvoi tel que la poulie de renvoi (138) est relié à un entraînement à vis sans fin (136).

21. Passerelle pour passagers selon au moins l'une des revendications 18 à 20,
**caractérisée en ce**
**que** dans la zone de contact avec la conduite d'alimentation (30, 166), les éléments de pression (146, 148, 150, 152, 154, 156, 158) sont répartis régulièrement autour de l'élément de renvoi.

22. Passerelle pour passagers selon au moins l'une des revendications 18 à 21,
**caractérisée en ce**
**que** le logement est une cage de dépose (82) et/ou un tambour (86) tendu par un ressort.

23. Passerelle pour passagers selon au moins l'une des revendications 18 à 22,
**caractérisée en ce**
**que** le logement (164) est disposé sur une protection contre les impacts (168) telle qu'un socle en béton.

24. Passerelle pour passagers selon au moins l'une des revendications 18 à 23,
**caractérisée en ce**
**que** l'élément de renvoi (138) tel que la poulie de renvoi est disposé par rapport au logement (164) de sorte que la conduite d'alimentation (166) puisse être introduite ou retirée du logement à la verticale ou de manière essentiellement verticale.
